# EUROPEAN PATENT APPLICATION

(11) **EP 3 547 113 A1**
(43) Date of publication of application: **02.10.2019**
(21) Application number: 19157703.0
(22) Date of filing: 18.02.2019
(51) Int. Cl.: G06F 8/65

(54) **SYSTEMS AND METHODS FOR OVER-THE-AIR SOFTWARE DEPLOYMENT VIA BROADCASTING**

(30) Priority: 30.03.2018 US 201862650927 P; 10.07.2018 US 201816031475
(71) Applicant: Laird Technologies, Inc., Chesterfield, MO 63017 (US)
(72) Inventor: Saeed, Youssif Abdulmuhsin M., Chesterfield, MO 63017 (US); Whitten, Benjamin John, Chesterfield, MO 63017 (US); Tailor, Mahendra, Chesterfield, MO 63017 (US)
(74) Representative: AWA Sweden AB

(57) **Abstract**

According to various aspects, exemplary embodiments are disclosed of systems and methods for over-the-air (OTA) software deployment via broadcasting. In an exemplary embodiment, the system includes multiple node devices. Each node device includes a short-range wireless communication receiver and memory. The system also includes a broadcaster device having a short-range wireless communication interface. The broadcaster device is configured to broadcast software update data via a short-range wireless communication broadcast. Each node device is configured to receive the broadcasted software update data from the broadcaster device via the short-range wireless communication broadcast, and store the received software update data in the memory of the node device. Associated methods and node devices are also disclosed.

## Description

### FIELD

The present disclosure generally relates to systems and methods for over-the-air (OTA) software deployment via broadcasting.

### BACKGROUND

This section provides background information related to the present disclosure which is not necessarily prior art.

Current over-the-air (OTA) firmware upgrades, updates, *etc.* for short-range wireless (*e.g*. BLUETOOTH low-energy) devices require the devices to be in a connection in order to send the large amounts of data. This approach is inefficient and has many limitations, including a limit on a number of connections that a single device can have, a requirement to send the same content in entirety to each device, *etc.*

### DRAWINGS

The drawings described herein are for illustrative purposes only of selected embodiments and not all possible implementations, and are not intended to limit the scope of the present disclosure.
FIG. 1 is a block diagram of a system for over-the-air (OTA) software deployment via broadcasting, according to one example embodiment of the present disclosure;
FIG. 2 is a block diagram of one of the node devices and the broadcaster device of the system of FIG. 1; and
FIG. 3 is a flow chart of a method for deploying software over-the-air (OTA) via broadcasting from a broadcaster device to multiple node devices, according to another example embodiment of the present disclosure.

Corresponding reference numerals indicate corresponding parts throughout the several views of the drawings

### DETAILED DESCRIPTION

Example embodiments will now be described more fully with reference to the accompanying drawings.

The inventor has recognized that current over-the-air (OTA) firmware upgrades, updates, *etc.* for short-range wireless (*e.g.* BLUETOOTH low-energy) devices require the devices to be in a connection in order to send the large amounts of data. This approach is inefficient and has many limitations, including a limit on a number of connections that a single device can have, a requirement to send the same content in entirety to each device one by one, *etc.*

The inventor, however, has recognized that it is possible to make connectionless over-the-air software updates, thereby increasing efficiency of the OTA updates, overcoming limitations of OTA updates, *etc.* As used herein, software update data may refer to any suitable software upgrades, firmware updates (such as upgrading to a more recent firmware version for security), *etc.*

Disclosed herein are exemplary embodiments of systems and methods for over-the-air (OTA) software deployment via broadcasting. In some cases, a low-energy (LE) Extended Advertising feature of a BLUETOOTH version five (*e.g*., BLUETOOTH v5) short-range wireless communication protocol may be used to perform OTA updates that do not require connections between a broadcaster device and a node device. For example, a connectionless OTA update may be performed without requiring a normal connection procedure (*e.g*., as described in a BLUETOOTH specification, *etc.*) between the broadcaster device and a node device.

This allows the broadcaster device to send large amounts of data that multiple node devices (e.g., remote devices) can receive at any suitable point in time (*e.g*., by syncing to periodic broadcasts of software update data from the broadcast device, *etc.*). For example, the broadcaster device may broadcast the software update data in one or more advertising (*e.g*., advert) chunks.

Each chunk may (or may not) be encrypted, and can include a device identifier (*e.g.* a remote device's ID), a content type (*e.g*., firmware or software), a content version (*e.g*., v28.1.6.4), a chunk sequence (*e.g*., chunk 3/55), a checksum, a message integrity check (MIC), *etc.*

In some embodiments, the node devices may broadcast a confirmation message once a firmware upgrade is completed. The broadcaster device can listen for the confirmation messages to determine whether each node device has acquired the entire content of the software update data.

For security, the broadcaster device and the node devices may use a shared key to encrypt and decrypt the broadcast software data. The broadcaster device can encrypt the chunks of software update data using the shared key prior to broadcasting the software update data, and the node devices can decrypt the chunks of software update data using the shared key after receiving the chunks of software update data. In some cases, a header may optionally be encrypted as well.

Therefore, example embodiments described herein may allow for over-the-air software deployment without requiring a connection to be established between the broadcaster device and every node device. This can facilitate simultaneous OTA software updates for any listening node device. In some cases, example embodiments can be used to deploy faster security updates for internet-of-things (IoT) devices, *etc.*

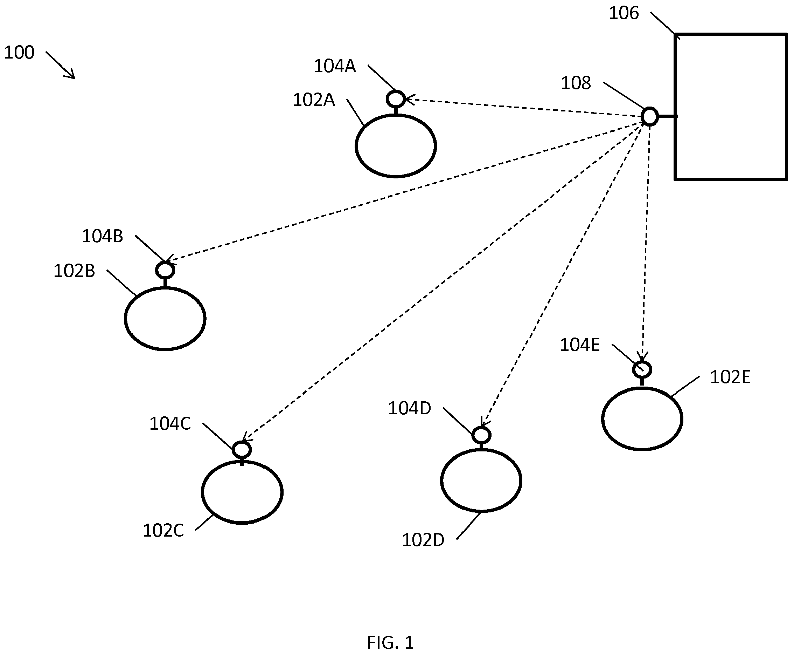

With reference to the figures, FIG. 1 illustrates a system 100 for over-the-air (OTA) software deployment via broadcasting, according to some aspects of the present disclosure. The system 100 includes multiple node devices 102A-102E. Each node device 102A-102E includes a short-range wireless communication receiver 104A-104E, a memory, and a processor.

The system 100 also includes a broadcaster device 106. The broadcaster device 106 includes a short-range wireless communication interface 108. The broadcaster device 106 is configured to broadcast software update data via a short-range wireless communication broadcast.

Each node device 102A-102E is configured to receive the broadcasted software update data from the broadcaster device via the short-range wireless communication broadcast. The node devices 102A-102E then store the received software update data in memory of the node devices 102A-102E.

As described above, the broadcaster device 106 may be configured to broadcast the software update data as a unidirectional broadcast without establishing a connection with any of the multiple node devices 102A-102E. For example, the broadcaster device 106 could be configured to broadcast the software update data using a low-energy extended periodic advertising protocol of short-range wireless communication. In some embodiments, the broadcaster device 106 may be configured to broadcast the software update data using a BLUETOOTH version five short-range wireless communication protocol (*e.g*., LE Extended Advertising).

As shown in FIG. 1, the system 100 includes five node devices 102A-102E. In other embodiments, the system could include more or less node devices. For example, the system may include significantly more than five node devices (e.g., ten devices, one hundred devices, etc.), and the broadcaster device 106 could be configured to broadcast the software update data to each of the node devices simultaneously. Because the broadcaster device 106 can take advantage of a non-directional nature of adverts (*e.g*., as opposed to a directional nature of connections), the broadcaster device 106 may not be limited to only a number of connections that the broadcaster device 106 is capable of. In some embodiments, the broadcaster device 106 may be able to broadcast the software update data to as many node devices as available BLE channels allow, *etc.*

As described above, the system 100 may use shared keys for security to inhibit unauthorized devices from accessing the software update data broadcast by the broadcaster device 106, *etc.* For example, the broadcaster device 106 and the multiple node devices 102A-102E could each include a shared key.

The broadcaster device 106 could encrypt the software update data using the shared key prior to broadcasting the software update data. In that case, the node devices 102A-102E can receive the encrypted software update data, and then decrypt the received software update data using the shared key.

As on example, each of the node devices 102A-102E could be an internet-of-things (IoT) device. In that case, the software update could include a security update for each IoT device. Encrypting the software update data using a shared key can inhibit unauthorized devices from accessing the security update of the IoT devices. Example embodiments described herein can allow for faster deployment of security updates to IoT devices, because many IoT devices can receive the broadcast security update at one time.

In some embodiments, the software update data includes firmware update data for each of the multiple node devices 102A-102E. In those instances, each of the multiple node devices 102A-102E can be configured to update a firmware version stored in the memory of the node device according to the firmware update data received from the broadcaster device 106.

Each of the node devices 102A-102E may be configured to broadcast a confirmation message when the firmware version stored in the memory is successfully updated. This can allow the broadcaster device 106 to listen for the confirmation messages broadcast by the node devices 102A-102E to confirm successful firmware updates.

As described above, any suitable short-range wireless communication protocol may be used. For example, a BLUETOOTH v5 LE Extended Advertising (*e.g*., Periodic Advertising) protocol could be used. This may allow for expanded broadcast capability, including the ability to broadcast the software update data on one or more of up to thirty seven different secondary data channels, broadcasting the software update data using a packet size of up to 255 bytes, broadcasting the software update data using a minimum advertising interval as low as 7.5 milliseconds. In other embodiments, software update data could be broadcast using more or less secondary (or primary) data channels, more or less bytes per packet, longer or shorter minimum connection intervals, *etc.*

According to the broadcast protocol, the software update data may be broadcast in one or more advertising chunks. For example, each chunk could include a device identifier, a software update data content type, a software update data content version, a chunk sequence, a checksum, a message integrity check (MIC), *etc.*

Each node device 102A-102E may be configured to determine whether any chunks of the software update data are missing according to the chunk sequence. When at least one of the chunks of the software updated data is missing, a node device can continue listening for another periodic broadcast of the software update data from the broadcaster device 106 to receive the missing chunk.

In some embodiments, the broadcaster device 106 is configured to broadcast the software update data on a periodic schedule. The broadcaster device 106 may also be configured to broadcast periodic broadcast schedule information. The periodic broadcast schedule information can include at least one of a channel map indicative of one or more data channels used for the period broadcasts of the software update data, an event counter for determining a channel hopping sequence, an offset indicative of a timing of a first periodic broadcast packet, an interval between successive periodic broadcasts, *etc.*

Each of the node devices 102A-102E may be configured to scan for the periodic broadcast schedule information broadcast by the broadcaster device 106, and synchronize with the period broadcasts from the broadcaster device 106 based on the periodic broadcast schedule information, in order to receive the software update data.

Each node device 102A-102E and the broadcaster device 106 may comprise any suitable short-range wireless communication node. For example, each node device 102A-102E and the broadcaster device 106 may comprise a BLUETOOTH short-range wireless communication node. The BLUETOOTH node may be a BLUETOOTH low energy (BLE) node, which operates according to a BLE protocol (*e.g*., BLUETOOTH v5, *etc.*). Each node device 102A-102E may be any suitable Internet of things (IoT) device, such as a medical wireless sensor device, an industrial wireless sensor device, *etc.*

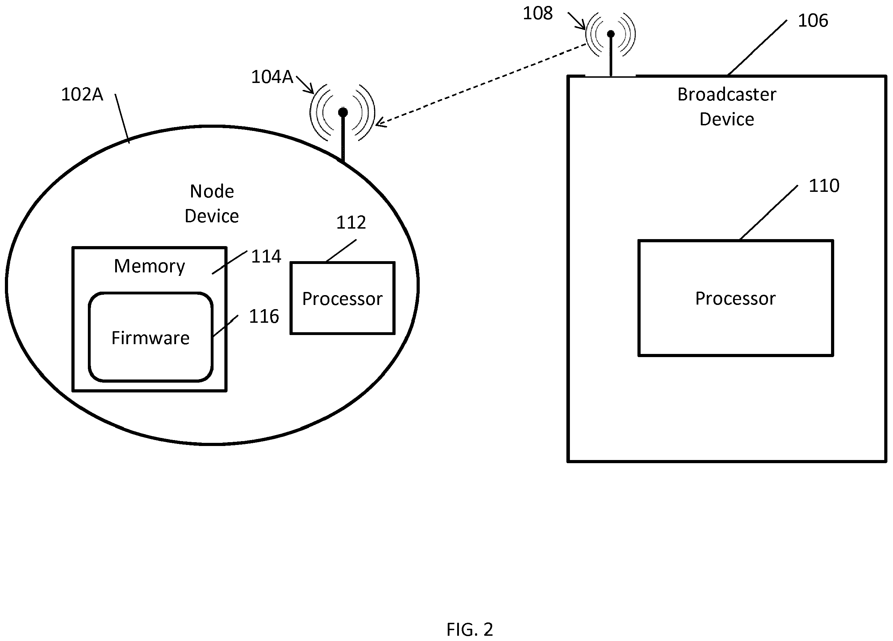

FIG. 2 illustrates a broadcast of software update data from the broadcaster device 106 to the node device 102A in the system 100. As shown in FIG. 2, the broadcaster device 106 includes a processor 110 and a short-range wireless communication interface 108. The short-range wireless communication interface 108 can be any suitable antenna, *etc.* for transmitting short-range wireless communication messages to the node device 102A.

The broadcaster device 104 can encrypt the software update data via the processor 110 (*e.g.* using a shared key, *etc.*), and can broadcast the software update data to the node device 102A via the short-range wireless communication interface 108. Although not shown in FIG. 2, the broadcaster device 106 may include a user interface for receiving input (*e.g*., commands, *etc.*) from a user, a display (*e.g*., a liquid crystal display (LCD), light emitting diodes (LED), indicator lights, *etc.*), an input element (*e.g*., a keypad, touchscreen, switches), *etc.*

The node device 102A includes the short-range wireless communication receiver 104A (broadly, a short-range wireless communication interface). The short-range wireless communication receiver 104A can be any suitable antenna, *etc.* for receiving short-range wireless communication messages broadcast by the broadcaster device 104. For example, the node device 102A may receive the software update data from the broadcaster device 106 via the short-range wireless communication receiver 104A.

The node device 102A also includes a processor 112 and a memory 114, which stores firmware 116. The memory 114 can store the software update data received from the broadcaster device 106. The node device 102A can then update a version of the firmware 116 according to the software update data received from the broadcaster device 106.

As described herein, the example broadcaster devices and node devices may include a microprocessor, microcontroller, integrated circuit, digital signal processor, *etc*., which may include memory. The broadcaster devices and node devices may be configured to perform (*e.g*., operable to perform, *etc.*) any of the example processes described herein using any suitable hardware and/or software implementation. For example, the broadcaster devices and node devices may execute computer-executable instructions stored in a memory, may include one or more logic gates, control circuitry, *etc.*

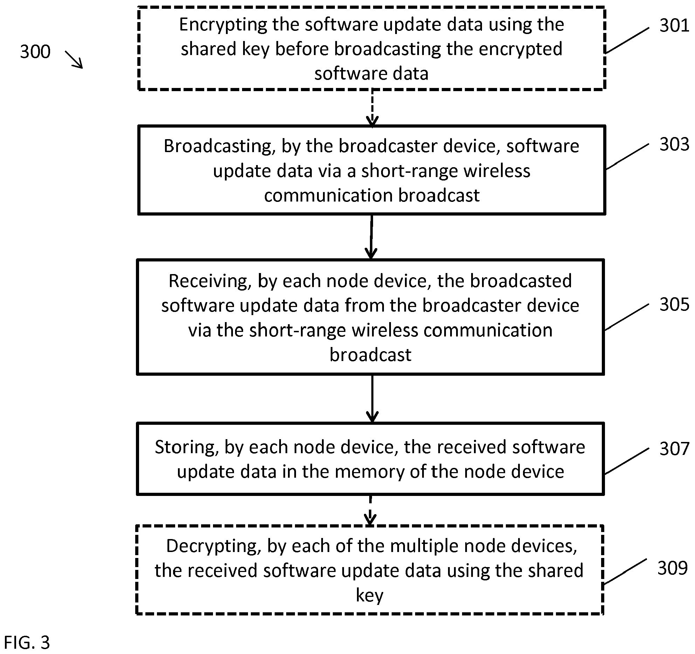

According to another example embodiment, an exemplary method 300 for deploying software over-the-air (OTA) via broadcasting from a broadcaster device to multiple node devices is disclosed, and illustrated in FIG. 3. The broadcaster device includes a short-range wireless communication interface, and each of the multiple node devices include a short-range wireless communication receiver and memory.

The exemplary method 300 generally includes broadcasting, by the broadcaster device, software update data via a short-range wireless communication broadcast, at 303. The method 300 further includes receiving, by each node device, the broadcasted software update data from the broadcaster device via the short-range wireless communication broadcast, at 305. In addition, the method includes storing, by each node device, the received software update data in the memory of the node device, at 307.

In some embodiments, broadcasting may include broadcasting the software update data as a unidirectional broadcast without establishing a connection between the broadcaster device and any of the multiple node devices. For example, broadcasting may include broadcasting the software update data using a low-energy extended periodic advertising protocol of a BLUETOOTH version five short-range wireless communication protocol.

The multiple node devices may include as many node devices as there are available BLE channels. In those cases, broadcasting can include broadcasting the software update data to all of the multiple node devices simultaneously.

In some embodiments, the broadcaster device and the multiple node devices each include a shared key. As shown by dotted lines in FIG. 3, the method 300 optionally includes encrypting the software update data using the shared key before broadcasting the encrypted software data, at 301. The method also optionally includes decrypting, by each of the multiple node devices, the received software update data using the shared key, at 309.

In another example embodiment, a node device in a system for over-the-air (OTA) firmware deployment via broadcasting includes a short-range wireless communication receiver, memory and a processor. The memory is configured to store firmware data for operating the node device.

The processor is configured to receive, via the short-range wireless communication receiver, software update data broadcast by a broadcaster device via a short-range wireless communication broadcast. The processor is also configured to store the received software update data in the memory of the node device, and update a version of the firmware data stored in the memory of the node device according to the firmware update data received from the broadcaster device.

The processor is optionally configured to receive the software update data broadcast by the broadcaster device as a unidirectional broadcast without establishing a connection with the broadcaster device (*e.g*., using a low-energy extended periodic advertising protocol of a BLUETOOTH version five short-range wireless communication protocol, *etc.*).

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms, and that neither should be construed to limit the scope of the disclosure. In some example embodiments, well-known processes, well-known device structures, and well-known technologies are not described in detail. In addition, advantages and improvements that may be achieved with one or more exemplary embodiments of the present disclosure are provided for purposes of illustration only and do not limit the scope of the present disclosure, as exemplary embodiments disclosed herein may provide all or none of the above mentioned advantages and improvements and still fall within the scope of the present disclosure.

Specific dimensions, specific materials, and/or specific shapes disclosed herein are example in nature and do not limit the scope of the present disclosure. The disclosure herein of particular values and particular ranges of values for given parameters are not exclusive of other values and ranges of values that may be useful in one or more of the examples disclosed herein. Moreover, it is envisioned that any two particular values for a specific parameter stated herein may define the endpoints of a range of values that may be suitable for the given parameter (*i.e*., the disclosure of a first value and a second value for a given parameter can be interpreted as disclosing that any value between the first and second values could also be employed for the given parameter). For example, if Parameter X is exemplified herein to have value A and also exemplified to have value Z, it is envisioned that parameter X may have a range of values from about A to about Z. Similarly, it is envisioned that disclosure of two or more ranges of values for a parameter (whether such ranges are nested, overlapping or distinct) subsume all possible combination of ranges for the value that might be claimed using endpoints of the disclosed ranges. For example, if parameter X is exemplified herein to have values in the range of 1 - 10, or 2 - 9, or 3 - 8, it is also envisioned that Parameter X may have other ranges of values including 1 - 9, 1 - 8, 1 - 3, 1 - 2, 2 - 10, 2 - 8, 2 - 3, 3 - 10, and 3 - 9.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (*e.g*., "between" versus "directly between," "adjacent" versus "directly adjacent," *etc.*). As used herein, the term "and/or" includes any and all combinations of one or more of the associated listed items.

Although the terms first, second, third, *etc.* may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

The foregoing description of the embodiments has been provided for purposes of illustration and description. It is not intended to be exhaustive or to limit the disclosure. Individual elements, intended or stated uses, or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A system for over-the-air (OTA) software deployment via broadcasting, the system comprising:
multiple node devices, each node device including a short-range wireless communication receiver and memory; and
a broadcaster device, the broadcaster device including a short-range wireless communication interface;
wherein the broadcaster device is configured to broadcast software update data via a short-range wireless communication broadcast; and
wherein each node device is configured to receive the broadcasted software update data from the broadcaster device via the short-range wireless communication broadcast, and store the received software update data in the memory of the node device.

2. The system of claim 1, wherein the broadcaster device is configured to broadcast the software update data as a unidirectional broadcast without establishing a connection with any of the multiple node devices.

3. The system of claim 2, wherein the broadcaster device is configured to broadcast the software update data using a low-energy extended periodic advertising protocol of short-range wireless communication.

4. The system of claim 3, wherein the broadcaster device is configured to broadcast the software update data using a BLUETOOTH version five short-range wireless communication protocol.

5. The system of claim 1, wherein the broadcaster device is configured to broadcast the software update data to all of the multiple node devices simultaneously.

6. The system of any one of the preceding claims, wherein:
the broadcaster device and the multiple node devices each include a shared key;
the software update data broadcast by the broadcaster device is encrypted using the shared key; and
each of the multiple node devices is configured to decrypt the received software update data using the shared key.

7. The system of claim 6, wherein:
each of the multiple node devices is an internet of things (IoT) computing device; and
the software update data includes a security update for each IoT computing device.

8. The system of any one of the preceding claims, wherein:
the software update data includes firmware update data for each of the multiple node devices; and
each of the multiple node devices is configured to update a firmware version stored in the memory of the node device according to the firmware update data received from the broadcaster device.

9. The system of claim 8, wherein:
each of the multiple node devices are configured to broadcast a confirmation message when the firmware version stored in the memory is successfully updated; and
the broadcaster device is configured to listen for the confirmation messages broadcast by the multiple node devices to confirm successful firmware updates.

10. The system of any one of the preceding claims, wherein:
the broadcaster device is configured to broadcast the software update data on one of at least thirty seven different secondary data channels of a short-range wireless communication protocol;
the broadcaster device is configured to broadcast the software update data using a packet size of 255 bytes; or
the broadcaster device is configured to broadcast the software update data using an advertising interval of 7.5 milliseconds.

11. The system of any one of the preceding claims, wherein:
the broadcaster device is configured to broadcast the software update data in one or more chunks; and
each chunk includes at least one of a device identifier, a software update data content type, a software update data content version, a chunk sequence, a checksum, and a message integrity check.

12. The system of claim 11, wherein:
each of the multiple node devices is configured to determine whether any chunks of the software update data are missing according to the chunk sequence; and
when at least one of the chunks of the software updated data is missing, said one of the multiple node devices is configured to continue listening for another periodic broadcast of the software update data from the broadcaster device to receive the missing chunk.

13. The system of any one of the preceding claims,wherein:
the broadcaster device is configured to broadcast the software update data on a periodic schedule;
the broadcaster device is configured to broadcast periodic broadcast schedule information including at least one of a channel map indicative of one or more data channels used for the periodic broadcasts of the software update data, an event counter for determining a channel hopping sequence, an offset indicative of a timing of a first periodic broadcast packet, and an interval between successive periodic broadcasts;
each of the multiple node devices is configured to scan for the periodic broadcast schedule information broadcast by the broadcaster device; and
each of the multiple node devices is configured to synchronize with the period broadcasts from the broadcaster device based on the periodic broadcast schedule information, in order to receive the software update data.

14. A method for deploying software over-the-air (OTA) via broadcasting from a broadcaster device to multiple node devices, the broadcaster device including a short-range wireless communication interface and each of the multiple node devices including a short-range wireless communication receiver and memory, the method comprising:
broadcasting, by the broadcaster device, software update data via a short-range wireless communication broadcast;
receiving, by each node device, the broadcasted software update data from the broadcaster device via the short-range wireless communication broadcast; and
storing, by each node device, the received software update data in the memory of the node device.

15. The method of claim 14, wherein:
broadcasting includes broadcasting the software update data as a unidirectional broadcast without establishing a connection between the broadcaster device and any of the multiple node devices; and/or
broadcasting includes broadcasting the software update data using a low-energy extended periodic advertising protocol of a BLUETOOTH version five short-range wireless communication protocol; and/or
a number of the multiple node devices is equal to a number of available BLE channels; and broadcasting includes broadcasting the software update data the software update data to all of the multiple node devices simultaneously; and/or
the broadcaster device and the multiple node devices each include a shared key, and the method further comprises encrypting the software update data using the shared key before broadcasting the encrypted software data; and decrypting, by each of the multiple node devices, the received software update data using the shared key.
